# EUROPEAN PATENT APPLICATION

(11) **EP 2 068 240 A1**
(43) Date of publication of application: **10.06.2009**
(21) Application number: 09155520.1
(22) Date of filing: 07.04.2005
(51) Int. Cl.: G06F 9/00

(54) **Providing upward-compatibility of portable clients by means of uploading device-specific configuration data**

(30) Priority: 13.04.2004 FI 20045129
(62) Divisional of application: 05736287.3
(71) Applicant: Nokia Corporation, 02150 Espoo (FI)
(72) Inventor: Rapakko, Jouni, 37910 Kylmäkoski (FI); Suomela, Mikko, 37470 Vesilahti (FI); Saario, Vesa, 33470 Ylöjärvi (FI)
(74) Representative: Pursiainen, Timo Pekka

(57) **Abstract**

The invention relates to the sharing of data between a first and a second device. A data transmission connection is set up between the devices to adapt the devices and to share data between said devices. The second device comprises an adapter program which adapts the first device to the second device on the basis of the setting data of the first device. The setting data of the first device are arranged in the first device, wherein the setting data are transmitted to said second device to implement the adaptation.

## Description

The present invention relates to a method comprising coupling a portable device to a personal computer, and performing an adaptation of the portable device and the personal computer by means of an adapter program stored in the personal computer on the basis of a device-specific configuration data relating to the portable device. The invention also relates to a personal computer comprising an adapter program configured to perform an adaptation of a portable device being coupled to the personal computer with the personal computer on the basis of a device-specific configuration data relating to the portable device. The invention also concerns a system comprising a portable device and a personal computer, said personal computer comprising an adapter program configured to perform an adaptation of a portable device being coupled to the personal computer with the personal computer on the basis of a device-specific configuration data relating to the portable device. Furthermore, the invention relates to a portable device for the system. Yet furthermore, the invention relates to a computer software product comprising memory means for storing an adapter program, which adapter program, when run in a personal computer, is configured to perform an adaptation of the portable device and the personal computer on the basis of a device-specific configuration data relating to the portable device,

Data transmission between two devices is known from various contexts. Data transmissions between computers as well as data transmissions between portable computers and other portable devices, such as mobile phones and personal digital assistants (PDA) are common operations in modern data processing. In addition to device-specific data transmissions, a need has also arisen to share information between devices of different types. And this need is increased, the more sophisticated the devices become. For example, a portable device can be connected to a computer via a USB cable, an infrared connection or a wireless Bluetooth connection. Furthermore, the computer requires a customized program, a so-called "adapter program", for importing data in the portable device, for synchronizing the data of the portable device with the data of the computer, or for configuring the portable device. By means of the adapter program, it is possible to share data between the computer and the portable device as well as to install software in the portable device.

The adapter program is stored in the computer and is suitable for several different models of portable devices by the same manufacturer. When new models are introduced on the market, the adapter program must be updated or a new version of it must be installed. The adapter program comprises device-specific information about the device models supported by it at the time. When the device is coupled to a computer, the adapter program identifies the device and retrieves the properties related to it from its own data storage. If the properties of the device in question are not found in the data storage, the device may be newer than the adapter program version in question.

The updating of a single adapter program does not necessarily present a problem for a private user, although it requires extra work. However, it is obvious that the more adapter programs there are to be updated, the more laborious the updating becomes. Such a situation may come up, for example, in the business world, where several employees may have different models of portable devices.

The consumer is normally provided with the adapter program of the portable device in connection with the purchase of the portable device. Furthermore, adapter programs are provided to be downloaded via the Internet, for which reason the adapter programs are easily accessible to a computer. With time, as more and more device models are launched on the market, the number of adapter programs increases as well, and the larger the supply of adapter programs becomes. This, in turn, may make it more difficult for the user to select the correct adapter program.

It may well be found that the present way of connecting a terminal to a computer is only down-compatible (*i.e*., backward compatible). This means that the adapter program is compatible with earlier device models but not future ones. In other words, the prior art seems to lack an adapter program which is also suitable for future device models (up-compatibility, or forward compatibility), which adapter program would be device independent). It is an aim of the present invention to provide a solution for implementing the adaptation of devices and the sharing of data.

The method according to the invention is primarily **characterized in that** the method comprises reading the device-specific configuration data being stored in the portable device from the portable device by the personal computer in order to perform the adaptation.

The personal computer is **characterized in that** the personal computer is configured to read the device-specific configuration data being stored in the portable device from the portable device in order to perform the adaptation.

Furthermore, the invention relates to a system which is primarily characterized in that the personal computer is configured to read the device-specific configuration data being stored in the portable device from the portable device in order to perform the adaptation.

The portable device is **characterized in that** the portable device comprises a memory configured to store the device-specific configuration data.

The invention also relates to computer software product that is **characterized in that** the adapter program also comprises instructions configured to read the device-specific configuration data being stored in the portable device from the portable device in order to perform the adaptation.

The invention is very significant for the possibilities to use the adapter program. The arrangement according to the invention makes it possible to connect a portable device to an adapter program whose version is older than the device. From this, it can be easily seen that adapter programs of different versions are no longer needed.

The invention will be described in more detail with reference to the appended drawings intended to facilitate the understanding of the method according to the invention and not to restrict the invention.
- Fig. 1: shows one example of the steps according to an embodiment of the invention in a reduced block chart, and
- Fig. 2: shows an example of a data processing system according to the invention, comprising a first and a second data processor.

As described above, the coupling of a portable device to a computer can be implemented physically in different ways. To control the device and to import data in the applications of the device, a connection with the computer is set up, for example, by means of a USB cable, an infrared connection, a wireless Bluetooth or a wireless LAN (WLAN) connection. These methods can naturally be replaced with another solution without affecting the implementation of the method according to the invention.

After setting up the connection, the adapter program of the computer is started to make data transmission possible. For starting the adapter program, device-specific configuration data relating to the portable device are utilized. In the arrangement according to the invention, the configuration data are stored in the portable device, and the adapter program adapted in the computer is arranged to know these data. With the invention, the portable device can configure itself with the adapter program and the computer.

Thanks to the fact that the configuration data of the adapter program are, according to the invention, stored in the portable device instead of the computer, the adapter program is compatible with other devices as well. When the portable device is coupled to the computer, the configuration server reads the adapter program settings (configuration data) from the device. Because of this, the adapter program does not need to know in advance, which device is in question each time. The adapter program will automatically include the required device properties in the present device properties in the computer. If the user has several portable devices, the setting data of these can also be added in the list of supported device settings. In the portable device, the configuration settings are stored in a file which can be found, for example, in the Capability entity complying with the OBEX (Object Exchange) protocol.

```
      <Capability>
           <General>
                 <Manufacturer>DeviceMaker Inc.</Manufacturer>
                 <Model> Handy100 </Model>
                 <SN>123456789</SN>
                 <SW version="2.0"/>
           </General>
           <Service>
                 <Name>PCSuite-Settings</Name>
                 <Ext>
                       <XNam>SuiteConf</XNam>
                       <XVal>File=C:EfolderEsuiteconf.xml</XVal>
                 </Ext>
           </Service>
      </Capability>
```

If the device specific configuration data are not found in the device in question, the adapter program can use its own data instead. If the configuration data are not found in the data of the adapter program itself, it can be assumed that the device does not support the adapter program system in question.

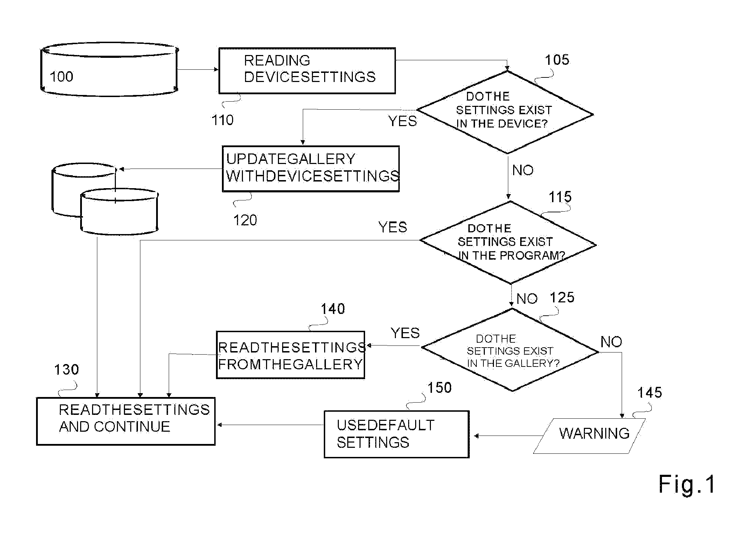

Figure 1 shows an example of the method according to the invention to read the configuration data from the data processor. In the figure, the configuration server (100) starts to read the device settings (110). The configuration server comprises at least the adapter program and a device data gallery for storing various device settings. At first, an attempt is made to read (105) the device specific configuration data from the device. If the configuration data are found, the device data gallery is updated (120) with them. If the configuration data are not found in the device, their location is checked from the adapter program.

The found configuration data can be read directly from the adapter program. However, if the configuration data are not found there, the existing device data gallery must be checked and read (140). If the device data gallery does not comprise the desired configuration data, a warning (145) is given and the default settings of the device in question are used for the configuration (150). When the configuration server has received the configuration data needed for the adaptation, the sharing of data can be started (130).

After the configuration has been successfully completed, the sharing of data can be started. This may include, for example, the transmission of calendar entries from the portable device into the computer, and *vice versa,* or the management of applications in the portable device. It is obvious that the data to be shared may also be other application data in the data processor which will not be described in more detail in this context because they are assumed to be obvious for a person skilled in the art.

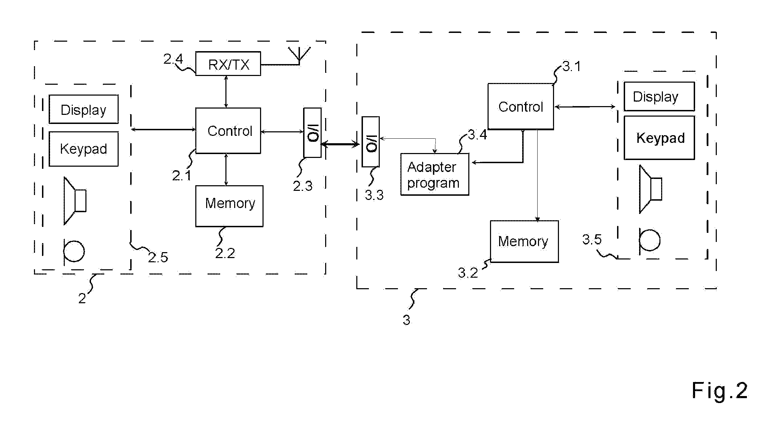

The data processor 2 of Fig. 2 comprises, for example, a control block 2.1 for controlling the functions of the data processor 2. Furthermore, the data processor 2 comprises a memory 2.2 for storing data, programs, etc., a connection 2.3 for connecting a configuration server 3 to the data processor 2, possible mobile communication means 2.4, as well as a user interface 2.5. The memory 2.2 comprises, *e*.*g*., stored configuration data of the data processor 2. Furthermore, Fig. 2 shows an example of a configuration server 3. The configuration server 3 also comprises a control block 3.1 for controlling the functions of the configuration server 3, as well as a memory 3.2 for storing data and program codes. The memory 3.2 is a storage of *e*.*g*. an algorithm, *i.e*., in practice, program instructions for performing a computation according to the algorithm. The configuration server also comprises an adapter program 3.4 which is arranged to check the configuration data of the data processor 2 by the method according to the invention. Furthermore, the configuration server 3 comprises a connection 3.3, by means of which data can be transmitted between the data processor 2 and the configuration server 3. Via the connections 2.3, 3.3, the data processor 2 can also be supplied, for example, with the required operating voltage. The configuration server 3 may also comprise a user interface 3.5. It is obvious that, in practice, the configuration server does not need to comprise all the elements shown in the figure, but it may be arranged as simple as possible. Thus, the actual utilization of the transmitted data can take place in the actual management computer, wherein the configuration server comprises means for setting up a connection with it.

Moreover, the idea of the method according to the invention is not dependent on the way of implementation. The essence of the invention is the configuration data arranged in the data processor and their reading by the external configuration server, wherein it is obvious that there may be different ways of implementation. Therefore, it is also obvious that the present invention is not limited to the presentation above, but it is applicable within the scope of the appended claims.

## Claims

1. A method comprising
- coupling a portable device (2) to a personal computer (3),
- performing an adaptation of the portable device (2) and the personal computer (3) by means of an adapter program (3.4) stored in the personal computer on the basis of a device-specific configuration data relating to the portable device
**characterized in that** the method comprises
- reading the device-specific configuration data being stored in the portable device (2) from the portable device (2) by the personal computer (3) in order to perform the adaptation.

2. The method according to claim 1, **characterized by** retrieving the device-specific configuration data as a file from the portable device (2) to the adapter program (3.4).

3. The method according to claim 1 or 2, **characterized in that** the portable device is a mobile phone.

4. The method according to claim 1 or 2 or 3, **characterized in that** the adapter program is a PCSuite^{™} software.

5. A personal computer (3) comprising
- an adapter program (3.4) configured to perform an adaptation of a portable device (2) being coupled to the personal computer (3) with the personal computer (3) on the basis of a device-specific configuration data relating to the portable device (2),
**characterized in that**
- said personal computer (3) is configured to read the device-specific configuration data being stored in the portable device (2) from the portable device (2) in order to perform the adaptation.

6. The personal computer according to claim 5, **characterized in that** the personal computer is configured to retrieve the device-specific configuration data as a file from the portable device (2) to the adapter program (3.4).

7. The personal computer according to claim 5 or 6, **characterized in that** the adapter program is a PCSuite^{™} software.

8. A system comprising
- a portable device (2) and a personal computer (3),
- said personal computer comprising an adapter program (3.4) configured to perform an adaptation of a portable device (2) being coupled to the personal computer (3) with the personal computer (3) on the basis of a device-specific configuration data relating to the portable device (2),
**characterized in that**
- said personal computer (3) is configured to read the device-specific configuration data being stored in the portable device (2) from the portable device (2) in order to perform the adaptation.

9. A portable device (2) for a system according to claim 8 **characterized in that** the portable device comprises a memory (2.2) configured to store the device-specific configuration data.

10. The portable device (2) according to claim 9, **characterized in that** the portable device (2) comprises a connection (2.3) configured to transmit said device-specific configuration data to the personal computer (3) for adaptation purposes.

11. The portable device (2) according to any of the claims 9-10, **characterized in that** the portable device (2) comprises means (2.4) for performing mobile communication.

12. The portable device according to any of the claims 9-10, **characterized in that** the portable device (2) is a portable computer or a PDA device.

13. A computer software product comprising
- memory means for storing an adapter program (3.4), which adapter program, when run in a personal computer (3), is configured to perform an adaptation of the portable device (2) and the personal computer (3) on the basis of a device-specific configuration data relating to the portable device,
**characterized in that**
- the adapter program (3.4) also comprises instructions configured to read the device-specific configuration data being stored in the portable device (2) from the portable device (2) in order to perform the adaptation.
